# EUROPEAN PATENT APPLICATION

(11) **EP 1 927 683 A2**
(43) Date of publication of application: **04.06.2008**
(21) Application number: 07254614.6
(22) Date of filing: 28.11.2007
(51) Int. Cl.: D01D 5/253, D01F 6/92, C08L 67/02

(54) **Polyester staple fiber (PSF)/filament yarn (POY and PFY) for textile applications**

(30) Priority: 28.11.2006 IN MU19532006
(71) Applicant: Futura Polyesters Limited, Mumbai 400 013 (IN)
(72) Inventor: Tammaji, Kulkarni Sanjay, Tamil Nadu (IN); Ramkrishna, Velury, Tamil Nadu (IN); Vitoba, Prabhu Gorpally, Tamil Nadu (IN); Gopinath, Rangachari, Tamil Nadu (IN); Ramakrishnan, Muthiah, Tamil Nadu (IN)
(74) Representative: Williams, Paul Edwin

(57) **Abstract**

The invention relates to a blended two component polymer system comprising Polytrimethylene Terephthalate (PPT) and a CoPolyester of Polyethylene Terephthalate (CoPET) with a PTT:CoPET composition ranging between 95: 5 and 5:95. The blended composition may be melt spun with circular and tetra lobal cross section spinnerettes for staple fibre and partially oriented yarn (POY) and the properties are compared with 100% PET polymer as well as 100% PTT polymer. The tetra channel fibre properties are superior when compared to the fibres produced from homopolymers as well as the bicomponent fibres particularly their moisture wicking characteristics and increased dyeability.

## Description

The invention relates to polyester staple fiber (PSF) /filament yarn (POY and PFY) for textile applications.

PTT, Polytrimethylene Terephthalate also known as 3GT, has achieved growing commercial interest as a fiber due to its desirable properties like its easy disperse dyeability at atmospheric pressure, low bending modulus, good elastic recovery and resiliency. PTT fiber, like PET fiber, is melt extrusion spun followed by the conventional two stage drawing of the undrawn spun fiber. However there are process parameter differences while processing due to the inherent difference in the characteristics of the polymers PET and PTT. PTT has a lower melt temperature by ~ 30°C and necessitates a shorter time until the spun yarn in the melt spinning is cooled down resulting in differences in quench air adjustment and the length of the cooling path in comparison with PET spinning. Another important difference is PTT's lower glass transition temperature (Tg) when compared to PET which causes much faster cold crystallization in PTT leading to a difference in fiber morphology during solidification and cooling down. The unique molecular structure of PTT gives the fiber intrinsic elasticity.

Processes for the production of PTT staple fibers and continuous filament are well known and are described in US 2006/0020103, 6835339, 6752945, 6495254, 2003/0111171, 6645621, 6423407, 6287688, WO 0222925, 99/11845, 99/27168, EP 0547553, 0754790, JP 52/08124, 52/08123, 52/05320, 2005256242, and other documents.

PTT staple fiber is manufactured by the conventional two stage process but with different process parameters when compared to processing PET. Typical production process equipment include an extruder, spin beam, melt metering pump, spin pack, cross flow or radial quenching systems, spin finish application units, take-up systems, undrawn fiber storage and conditioning, creel formation, draw frames with or without heat setting, crimper , dryer and fiber cutter.

However PTT as spun undrawn fibers produced by the conventional two stage process have extremely low degrees of orientation and crystallization with a Tg as low as 35°C. As a result, the undrawn fiber properties change quickly with time resulting in the generation of fluffs, neps and yarn breakage during the drawing process. This is also reflected in the shrinkage of the undrawn PTT fiber in comparison with PET undrawn fiber. PET undrawn fiber is quite stable and shows a very low % shrinkage for a storage time of even up to one week. On the contrary PTT undrawn fiber is highly susceptible for shrinkage under ambient conditions of temperature and relative humidity (RH) and shows increased shrinkage with storage time. To get a stable low shrinkage similar to PET, the PTT undrawn fiber has to be stored at low temperatures of < 20°C. PTT fiber processors recommend that the PTT undrawn fiber creel should be stored in an air-conditioned atmosphere to avoid shrinkage. Different attempts have been reported in the prior art to overcome these disadvantages.

WO 99/27168 and WO 96/00808 suggest a method of continuously performing spinning and drawing in one stage without taking up the undrawn yarn.

US 6495254 proposes a method of increasing the spinning rate to develop higher degrees of orientation and crystallization but still the variation in shrinkage with time is inevitable.

US 6383632 describes a process for preparing fine denier PTT feed yarns and drawn yarns.

WO 99/39041 discloses a method of improving specific surface properties of PTT fibers by coating the fibers with a surface finishing agent having a specific composition but does not deal with shrinkage differences.

EP 1016741 describes using a phosphorous additive in PTT spinning to get spinning stability.

US 6423407 deals with a process of producing PTT filament yarn comprising not less than 95 mole % PTT repeating unit and not more than 5 mole % of other ester repeating unit and spinning at not less than 2000m/min followed by coating the extrudate with a finishing agent. At less spinning speeds shrinkage of fibers in the undrawn yarn is caused by the formation of crystallite and relaxation of the oriented molecules.

US 6740270 describes a spin draw process of making POY from PTT. Spin draw process comprising two or three pairs of heated godets are generally used to make fully oriented yarn (FOY). But this process, though more expensive than the conventional process used to make PET POY, is used with PTT mainly to stabilize the PTT POY against shrinkage and to improve the package stability and shelf life.

US 7005093 deals with PTT POY spinning and provides an analytical method to predict the aging process of the bobbins.

JP 2002061038 relates to PTT POY spinning using a special spinning method of extruding the PTT polymer at a surface temperature of a spinneret within a specified range to reduce the rapid cooling of the molten yarn.

US 6218008 has disclosed an easy dyeable polyester filament yarn consisting of 60-95 mol% of PET and 5-40 mol% of PTT.

US 4167541 describes a continuous carrierless dyeable polyester filament yarn preparation by using a melt blend system comprising not less than 78 wt.% PET coploymerized with major amounts (2-12 wt.%) of a dicarboxylic acid other than terephthalic acid (PTA) like adipic acid, sebacic acid etc. and a homopolymer selected from PTT, Polybutylene terephthalate (PBT) and Polyhexamethylene terephthalte (PHT) at levels of 1-10 wt.%.

The above mentioned last two US patents emphasize the fibers' affinity to disperse dyestuffs but do not provide information on the spinning and drawing processes.

Non circular cross sectional fibers (e.g. tetralobal, hexalobal, octalobal etc.) are generally used for moisture wicking or transport properties in the yarn and subsequently in the fabric. Moisture wicking is desirable in fabrics used for sportswear as they help in keeping the moisture away from the wearer and gives comfort.

US 4634625 describes continuous filament PET yarns of tetralobal (tetra channel) cross section with the resulting fabric having a combination of soft hand and natural luster without glitter.

US 5736243 deals with continuous PET filaments with a 4-groove cross section (tetra channel) resulting in better processing in worsted system.

US 2001/0033929 describes a process for making fully oriented yarn of octalobal cross section comprising PTT present to the extent of at least 85 mole%.

US 6835339 and 6458455 deal with processes of making PTT tetrachannel cross-section staple fibers, yarns, fiberfill, fabrics etc.

US 6620505 provides a method of making PTT trilobal yarn wherein the PTT component is at least 95% and containing 5% or less of other ester repeating units.

US 6287688 deals with a process for making PTT POY with cross-sections of oval, octalobal, trilobal, tetralobal and the like.

US 6656586 describes bicomponent fibers (POY, Fully Drawn Yarn and Staple fibers) with high moisture wicking rates comprising PET and its copolyesters and PTT of ratios of at least about 30:70 but not more than about 70:30. The tetralobal, hexalobal, and octalobal bicomponent fibers consist of two types of distinct fiber in a side-by-side and eccentric sheath-core configuration.

According to this invention there is provided a polymer resin for making melt spun staple fibers and partially oriented yarn with circular and tetra lobal cross sections, said resin comprising Polytrimethylene Terephthalate (PTT) homogenously blended with a CoPolyester of Polyethylene Terephthalate (CoPET) with a PTT:CoPET composition ranging between 95:5 and 5:95 by weight, said CoPET containing a dicarboxylic acid selected from oxalic acid, malonic acid, succinic acid, glutaric acid, adipic acid, pimelic acid, suberic acid, azelaic acid, sebacic acid and 1,10-decanedicarboxylic acid and aromatic dicarboxylic acids selected from isophthalic acid, sulfoisophthalic acid, phthalic acid, naphthalenedicarboxylic acid and diphenyl ether dicarboxylic acid.

Typically the ratio of PTT to CoPET is in the range of 80:20 to 30:70 by weight.

Typically the intrinsic viscosity of the PTT ranges from 0.85 to 1.40.

Typically the intrinsic viscosity of the CoPET ranges from 0.50 to 0.70.

The invention also extends to fibers having a circular , tetrachannel, multilobal cross Section made from the polymer resin of this invention.

PTT staple fiber spinning results in satisfactory drawing performance and yields acceptable fiber properties only if the undrawn spun fiber is stored under controlled low temperature conditions. Similarly unless the more expensive spin draw process is used, as detailed earlier, it is difficult to get stable POY package with longer shelf life. Storage of PTT as spun fiber under ambient atmosphere results in reduction of shrinkage and the residual shrinkage varies with time and temperature. This variation in shrinkage affects the Natural Draw Ratio (NDR) of the fiber resulting in processability difficulties in drawing. Due to the limitation in drawing the finished staple fiber / filament yarn gives low strength and very high elongation which gets reflected in poor performance in the mills particularly while carding and roving to yarns or in knitting.

To overcome these problems in PTT staple fiber spinning and POY production, this invention suggests incorporation of a polymer composition comprising PTT and a CoPET in a single homogenous blend. The invention envisages the use of PTT - CoPET as a resin composition for making staple fiber and POY. The fiber made from the resin in accordance with this invention can be regular round or can have a circular cross section. Also envisaged are fibers of multilobal cross sections particularly tetralobal or tetrachannel cross sections.

The CoPET is a copolyester of PET with a dicarboxylic acid selected from aliphatic compounds like oxalic acid, malonic acid, succinic acid, adipic acid and the like, and aromatic acids like isophthalic acid, sulfoisophthalic acid and the like. The spun fiber resulting from this copolyester composition when stored under normal ambient conditions does not show a varying shrinkage with time but gives a constant residual shrinkage which shows good performance in the drawing process and also yield finished fiber with proper elongation and tenacity. Staple fiber /POY obtained through this process performs well in the mills. Avoiding the low temperature storage conditions minimizes the energy cost by way of the refrigeration load resulting in considerable saving in the cost of production. Additionally improvement in mechanical properties is seen which results in easy processability of the fiber.

Considerable trials were taken with varying PTT : CoPET ratios from 5:95 to 95:5 by weight and arrived at an optimum blended composition of PTT:CoPET in the range of 90:10 and 70:30 by weight resulting in the following features in the case of staple fiber spinning of circular and tetralobal cross sections.
- The residual shrinkage of the PTT-CoPET spun fiber was higher than observed with 100% PTT (Refer Table 1 & 3)
- No variation in residual shrinkage when the PTT-CoPET spun fiber was stored under ambient conditions in contrast to the variation observed with 100% PTT fiber (Refer Table 1 & 3)
- No significant variation in residual shrinkage of PTT-CoPET spun fiber up to 50 - 60 hours of storage
- Consistent drawing process performance (Refer Table 4)
- Fiber properties like strength, elongation and elastic recovery are better when compared to 100 % PTT fiber. (Refer Table 2 & 4)
- Fiber strength expressed as tenacity (g/d) is greater by 10 - 15 % (Refer Table 2&4)
- In tetrachannel fiber produced from the PTT-CoPET alloy/blend resin there is an appreciable increase in moisture wicking property, both in the yarn and in the fabric when compared to that produced from 100% PTT fiber (Refer Table-5 for yarn and Table-6 for knitted fabric)
- Improved and good performance while converting to yarn in the mills(Refer Table 7)
- As an additional advantage fiber show a 10 % increase in dyeing strength when dyed at boil (Refer Table 8).

In the case of POY spinning using an alloy blend of PTT with CoPET instead of 100% PTT the following additional advantages are seen
• Winding tension can be brought to a minimum for good runnability even with godetless spinning.
• POY spinning with 100% PTT often needs thick walled bobbins as winding an elastic filament at high speed results in tightening of the package. This is not the case with PTT-CoPET spinning and the normal bobbins as used in PET spinning is adequate.
• In contrast to 100% PTT, lower spinning speeds and godetless spinning are possible with PTT-CoPET resin.
   PTT-CoPET POY properties are given in Table 10.

Various melt spinning trials are conducted with circular holed spinnerettes to optimize the composition of PTT:CoPET as described in the following examples.

### Example 1

PTT : CoPET chips, having an Intrinsic Viscosity of 0.92 and 0.58 dl/g respectively blended in the ratio of 95:5 by weight was dried at 130 - 140°C with a residence time of 6 hours in Dryer. Dried chips fed into the extruder where the zone temperatures were maintained at 230° to270°C was converted to molten polymer and passed through a Continuous Polymer Filter.
Molten Polymer is metered (37 grams per min) through the pump in the spinning head and passed through a 74 holes (circular) spinneret. The group of spun filaments was solidified in the quench chamber with cooling air followed by application of chilled finish. Filament bundle taken up at a speed of 1050 meters/minute is wound on to a bobbin and drawn in a Draw twister.
Spun yarn & Draw twisted yarn samples were analyzed for Boiling water shrinkage and tensile properties.

### Example 2

PTT : CoPET chips, having an Intrinsic Viscosity of 0.92 and 0.58 dl/g respectively blended in the ratio of 80:20 by weight was dried at 140 - 145°C with a residence time of 6 hours in Dryer. Dried chips fed into the extruder where the zone temperatures were maintained at 230° to270°C was converted to molten polymer and passed through a Continuous Polymer Filter.
Molten Polymer is metered (37 grams per min) through the pump in the spinning head and passed through a 74 holes spinneret. The group of spun filaments was solidified in the quench chamber with cooling air followed by application of chilled finish. Filament bundle taken up at a speed of 1050 meters/minute is wound on to a bobbin and drawn in a Draw twister.
Spun yarn & Draw twisted yarn samples were analyzed for Boiling water shrinkage and tensile properties.
Results of testing performed on fibers made from the polymer resin of this Example are shown in Table 3.

### Example 3

PTT : CoPET chips, having an Intrinsic Viscosity of 0.92 and 0.58 dl/g respectively blended in the ratio of 40:60 by weight was dried at 160°C with a residence time of 5 - 6 hours in Dryer. Dried chips fed into the extruder where the zone temperatures were maintained at 230° to280°C was converted to molten polymer and passed through a Continuous Polymer Filter.
Molten Polymer is metered (37 grams per min) through the pump in the spinning head and passed through a 74 holes spinneret. The group of spun filaments was solidified in the quench chamber with cooling air followed by application of chilled finish. Filament bundle taken up at a speed of 1050 meters/minute is wound on to a bobbin and drawn in a Draw twister.
Spun yarn & Draw twisted yarn samples were analyzed for Boiling water shrinkage and tensile properties.

### Example 4

PTT : CoPET chips, having an Intrinsic Viscosity of 0.92 and 0.58 dl/g respectively blended in the ratio of 20:80 by weight was dried at 150 - 160°C with a residence time of 6 hours in Dryer. Dried chips fed into the extruder where the zone temperatures were maintained at 230° to280°C was converted to molten polymer and passed through a Continuous Polymer Filter. Molten Polymer is metered (37 grams per min) through the pump in the spinning head and passed through a 74 holes spinneret. The group of spun filaments was solidified in the quench chamber with cooling air followed by application of chilled finish. Filament bundle taken up at a speed of 1050 meters/minute is wound on to a bobbin and drawn in a Draw twister.
Spun yarn & Draw twisted yarn samples were analyzed for Boiling water shrinkage and tensile properties.

### Example 5

PTT : CoPET chips, having an Intrinsic Viscosity of 1.30 and 0.58 dl/g respectively blended in the ratio of 20:80 by weight was dried at 150-160°C with a residence time of 6 hours in Dryer.

Dried chips fed into the extruder where the zone temperatures were maintained at 230° to 280°C was converted to molten polymer and passed through a Continuous Polymer Filter.
Molten Polymer is metered (37 grams per min) through the pump in the spinning head and passed through a 74 holes spinneret. The group of spun filaments was solidified in the quench chamber with cooling air followed by application of chilled finish. Filament bundle taken up at a speed of 1050 meters/minute is wound on to a bobbin and drawn in a Draw twister.
Spun yarn & Draw twisted yarn samples were analyzed for Boiling water shrinkage and tensile properties.

### Example 6

PTT : CoPET chips, having an Intrinsic Viscosity of 0.92 and 0.65 dl/g respectively blended in the ratio of 80:20 by weight was dried at 130°C with a residence time of 4 hours in Dryer.
Dried chips fed into the extruder where the zone temperatures were maintained at 250° to 270°C was converted to molten polymer and passed through a Continuous Polymer Filter.
Molten Polymer is metered (525 grams per min) through the pump in the spinning head and passed through a 1066 holes spinneret with a tetra-channel cross section. The group of spun filaments was solidified in the quench chamber with cooling air at 16°C followed by application of chilled finish. Spun Tow taken up at a speed of 1250 meters/minute was collected in cans with DM water spray.
The Spun Tow cans were stored at ambient conditions and tested for residual boiling water shrinkage. The undrawn Tow from the cans was processed through a two stage drawing system followed by heat setting, crimping relaxing and cutting the drawn fiber to specific staple lengths of cut fibers.
Staple fibers were used for spinning 20'S yarn and knitted socks, which were taken for evaluation of Wicking rate, Dyeing strength.

The results of undrawn (spun yarn) and drawn (draw twisted) fibre are summarized in Table - 11. Based on the various properties, particularly the shrinkage, PTT-CoPET blend of 80:20 is chosen for establishing our invention

### Example:7

PTT:CoPET alloy / blended chips, of I.V. 0.90 ± 0.05:0.60 ± 0.05, comprising of a composition in the ratio of 80 : 20 by weight, is thoroughly dried at 120 - 130°C and extruded to a molten polymer melt through an extruder with zone temperatures maintained from 240 to 280°C and then spun through circular holed or tetralobal holed spinneret provided in the spinning head at a take-up speed ranging from 700-1500 meters/minute. The group of spun filaments is solidified in a quench chamber with cooling air followed by application of chilled finish. The resulting as spun or undrawn yarn is collected in cans while simultaneously spraying chilled demineralized water in the can during the fiber collection. The cans containing the undrawn yarn are stored both at ambient storage conditions and also at controlled temperature conditions and samples of undrawn fiber are collected at different hours and tested for residual boiling water shrinkage. The undrawn fiber from the cans are processed through a two stage drawing system followed by heat setting, crimping, relaxing and cutting the drawn fiber to specific staple lengths of finished fibers.

Similar experiments were conducted with 100% PTT and the results of the undrawn fiber of both PTT and PTT-CoPET (Example 2) stored under different conditions and the drawn fiber properties are given in the following Tables 1 to 4.

As described in the prior art PTT-CoPET bicomponent fiber has been used (US 6656586) for making tetrachannel bicomponent staple fiber with moisture wicking property. In the present invention the blended PTT-CoPET composition is used to make the tetra channel staple fiber with a homogenously blended composition rather than the bicomponent type. Bicomponent fiber making involves expensive and complex spin pack components.
Also in the bicomponent fiber due to a clear boundary between the two components there is a possibility of delamination and lack of synergy in the final properties of the fiber due to the non-mixing and discreet presence of the two components. There are advantages in blending PTT and CoPET resins either during the resin manufacture or prior to extrusion of filaments. The blended fiber process is economical as the normal spin pack components are sufficient to produce the fiber. Also the fiber properties like tenacity, elongation and moisture wicking will be better in the blended fiber when compared to the bicomponent. This is because in blending there is perfect homogenization of the two components viz.PTT and CoPET which improves the processability and also helps in obtaining fibers for specific needs by tailoring one or more properties with minimum sacrifice in other properties. Due to the homogeneity of the blend the composition behaves as a single polymer. The interphase interactions and adhesion between the crystalline phase of the components, resulting from their miscibility in the amorphous phase, improves mechanical properties such as tenacity and modulus of elasticity of the PTT-CoPET blend. Table-9 gives the properties of the undrawn and drawn tetrachannel staple fiber using the blended composition of PTT-CoPET .

Preliminary studies carried out with PTT- CoPET alloy/blend for producing PFY through POY (Partially Oriented Yarn) showed trends similar to that observed with staple fiber. Properties of POY obtained from these studies are summarized in Table-10

**TABLE -1**

| PTT Undrawn Fiber - Shrinkage and Storage Conditions | | | | | |
|---|---|---|---|---|---|
| Example Serial No. | Final Fiber Denier | Undrawn Storage Condition | Undrawn Storage Hours | Initial, Zero Hour, % Boiling Water Shrinkage (BWS) | Residual % BWS at different Hours of Storage |
| 1. | 3.0 | Room Temp. ~ 32 °C | 48 | 29-32 | 10-13 |
| 2. | 3.0 | ----do---- | 5 | 31 | 17 |
| 3. | 2.5 | ----do---- | 18 | 39 | 3 |
| 4. | 2.5 | Controlled Temp. ~24°C | 18 | 39 | 33 |
| 5. | 1.4 | Room | 24 | 50 | 17 |
| | | Temp. ~32°C | | | |
| 6. | 1.4 | ----do---- | 36 | 44 | 16 |
| 7. | 1.4 | Controlled Temp. ~24°C | 24 | 51 | 48 |
| 8. | 1.4 | -----do----- | 36 | 44 | 43 |
| 9. | 1.4 | ----do----- | 78 | 44 | 43 |
| 10. | 1.4 | ----do---- | 96 | 44 | 45 |

**TABLE-2**

| PTT Drawn Fiber Properties from Undrawn of Table - 1. | | | | |
|---|---|---|---|---|
| Serial No. | Final Finished Fiber Denier | Tenacity, g/d | % Elongation | % Shrinkage, 180°C, 20 minutes |
| 1. | 3.1 - 3.2 | 1.6-2.0 | 109-143 | 3.4-3.7 |
| 2. | 2.4-2.6 | 2.3-2.8 | 106-120 | 6.5-6.8 |
| 3. | 1.3- 1.4 | 3.2-3.4 | 82-85 | 8.1-8.9 |

**TABLE - 3**

| PTT - CoPET Undrawn Fiber - Shrinkage and Storage Conditions | | | | | |
|---|---|---|---|---|---|
| Trial Serial No. | Final Fiber Denier | Undrawn Storage Condition | Undrawn Storage Hours | Initial, Zero Hour, % Boiling Water Shrinkage (BWS) | Residual % BWS at different Hours of Storage |
| 1. | 3.0 | Room Temp. ~32°C | 58 | 56 | 55 |
| 2. | 3.0 | ---do--- | 58 | 55 | 54 |
| 3. | 2.5 | ---do--- | 98 | 62 | 57 |
| 4. | 2.5 | ---do--- | 98 | 61 | 53 |
| 5. | 2.5 | ---do--- | 36 | 55 | 53 |
| 6. | 2.5 | ---do--- | 58 | 55 | 54 |
| 7. | 1.2 | Controlled Temp. ~ 24°C | 36 | 56 | 53 |
| 8. | 1.2 | ----do---- | 58 | 56 | 55 |

**TABLE - 4**

| PTT - CoPET Drawn Fiber Properties | | | | |
|---|---|---|---|---|
| Serial No. | Final Finished Fiber Denier | Tenacity, g/d | % Elongation | % Shrinkage, 180°C, 20 minutes |
| 1. | 1.4 | 3.8 | 70.0 | 9.0 |
| 2. | 2.5 | 3.0 | 80.0 | 10.0 |
| 3. | 3.0 | 2.9 | 84.0 | 11. |

**TABLE - 5 Evaluation ofPTT-CoPET Fibre Wicking Rate at Yarn Stage**

| TYPE→ | 100% PET CIRCULAR | 100% PTT CIRCULAR | 100% PET TETRA LOBAL | PTT-CoPET TETRA LOBAL | % Increase in wicking rate of PTT-CoPET Yarn |
|---|---|---|---|---|---|
| Time (Min.) ↓ | | | | | |
| | 20's Count | 20'sCount | | | |
| | | | 20's Count | 20's Count | |
| 5 | 31.7 mm | 41.7 mm | 49.8 mm | 78.8 mm | 58 |
| 10 | 44.0 | 53.0 | 53.8 | 82.5 | 53 |
| 15 | 59.0 | 64.0 | 60.8 | 83.5 | |
| 20 | 64.7 | 67.0 | 66.0 | 84.0 | 27 |
| 25 | 68.7 | 71.3 | 66.8 | 85.5 | |
| 30 | 72.7 | 75.3 | 69.5 | 86.5 | 24 |
| 35 | 76.0 | 78.0 | 70.8 | 87.0 | |
| 40 | 77.7 | 80.0 | 71.5 | 87.8 | |
| 45 | 78.3 | 82.0 | 72.3 | 88.0 | |
| 50 | 78.7 | 82.7 | 72.5 | 88.8 | |
| 55 | 79.3 | 83.3 | 73.3 | 89.3 | |
| 60 | 79.3 | 83.7 | 73.8 | 89.8 | |
| 65 | 79.7 | 84.0 | 74.0 | 90.3 | |
| 70 | 80.0 | 84.7 | 74.5 | 90.3 | |
| 75 | 80.0 | 84.7 | 74.8 | 90.8 | |
| 80 | 80.0 | 85.7 | 75.3 | 91.0 | |
| 85 | 80.0 | 85.7 | 75.3 | 91.0 | |
| 90 | 80.0 | 85.7 | 75.8 | 91.5 | |

**TABLE - 6 Evaluation of PTT-CoPET Fibre Wicking Rate at Knitted Fabric Stage**

| TYPE → | 100% PET CIRCULAR | 100% PTT CIRCULAR | 100% PET TETRA LOBAL | PTT-CoPET TETRA LOBAL | % Increase in wicking rate of PTT-CoPET |
|---|---|---|---|---|---|
| Time(Min.) ↓ | | | | | |
| | 20's Count | 20's Count | | | |
| | | | 20's Count | 20's Count | |
| 2 | 0.5 mm | 5.0 mm | 8.5 mm | 19.0 mm | 124 |
| 4 | 3.0 | 12.0 | 12.5 | 31.0 | |
| 6 | 5.0 | 14.0 | 19.0 | 38.5 | |
| 8 | 6.0 | 16.5 | 22.5 | 46.0 | |
| 10 | 7.0 | 21.0 | 26.5 | 50.5 | 91 |
| 12 | 8.0 | 22.5 | 33.5 | 55.5 | |
| 14 | 9.0 | 26.0 | 37.0 | 61.5 | |
| 16 | 10.0 | 29.5 | 41.5 | 67.5 | |
| 18 | 12.0 | 32.5 | 47.5 | 71.0 | |
| 20 | 13.0 | 37.5 | 49.5 | 73.5 | 48 |
| 25 | 16.0 | 38.5 | 54.0 | 78.0 | |
| 30 | 18.0 | 45.0 | 55.5 | 88.0 | 59 |
| 35 | 20.0 | 53.0 | 63.0 | 94.0 | |
| 40 | 23.0 | 59.5 | 65.5 | 99.5 | |
| 45 | 24.0 | 64.5 | 68.0 | 104.0 | |

**TABLE - 7**

| **Improvements in Processing of (PTT - CoPET) Fibre over PTT Fibre in Spinning Mill** | | |
|---|---|---|
| SI.No | PTT 100% | PTT-CoPET |
| 1 | 2 Pre Opening given for processing in Blow Room | Pre Opening not required |
| 2 | Lap length was reduced by 30% due to bulkiness | No reduction in Lap length |
| 3 | Lap licking in carding observed 5 - 6 times Per lap. | Lap licking tendency was less/ occasional |
| 4 | Web sagging observed in Carding | No web sagging |
| 5 | Sliver was Bulky in appearance | Compact sliver |
| 6 | 5-6 interruptions per can observed due to fluff in sliver during breaker draft | Maximum 1 interruption observed per can. |
| 7 | Speed at Draw frame was 120 mpm (for both breaker & finisher) | Could run at higher Speed (140 mpm for breaker & 250 mpm for finisher) |
| 8 | Front cot roll lapping observed initially | No Lapping |
| 9 | Higher Twist Multiplier applied in Simplex (1.05) | Twist Multiplier kept at 0.85 in Simplex |
| 10 | 7-10 breaks per 100 spindle hours in Ring Spinning | 3 breaks per 100 spindle hours in Ring Spinning |

**TABLE - 8 Evaluation of PTT-CoPET Fibre Dyeing Strength at Boil**

| Sl.No. | Type | Denier | Cross Section | Yarn Count | 2% Dyeing Strength at Boil | | | | | |
|---|---|---|---|---|---|---|---|---|---|---|
| | | | | | Navy Blue | Violet | Orange | Red | Rubain | Average |
| 1 | 100% PET | 2.5 | Circular | 20's | 100 | 100 | 100 | 100 | 100 | |
| 2 | 100% PTT | 3.0 | Circular | 20's | 194 | 262 | 248 | 176 | 168 | |
| 3 | 100% PET | 1.4 | Tetra Lobal | 20's | 34 | 37 | 33 | 36 | 32 | |
| 4 | PET-Co PET | 1.4 | Tetra Lobal | 20's | 248 | 295 | 246 | 183 | 172 | |
| % Increase in Dyeing Strength of PTT- 28 CoPET Fiber over 100% PTT → | | | | | | 13 | - | 4 | 2 | 12 |

**TABLE - 9 PTT-CoPET TetraChannel Cross Section Fiber Properties**

| Serial No. | UNDRAWN FIBER | | | DRAWN FIBER | | |
|---|---|---|---|---|---|---|
| 1. | Denier | 4.31 | 3.33 | Denier | 1.85 | 2.75 |
| 2. | Breaking Load, g | 9.09 | 6.58 | Tenacity, g/d | 3.4 | 3.0 |
| 3. | % Elongation | 226 | 223 | T_{12,} g/d | 0.8 | 0.8 |
| 4. | Natural Draw Ratio | 2.71 | 2.74 | % Elongation | 73 | 84 |
| 5. | - | - | - | Hot Air Shrinkage, 180°C, 20 minutes | 11.3 | 10.7 |

**TABLE - 10**

| PTT - CoPET POY Properties | | | | | |
|---|---|---|---|---|---|
| Serial No.. | Parameters | 100 % PTT | | PTT-CoPET | |
| 1. | Denier/No.of Filaments | 110/72 | 110/36 | 110/72 | 110/36 |
| 2. | Winder Speed, m/min. | 3200 - 3600 | 3200 - 3600 | 3200 - 3600 | 3200 -3600 |
| 3. | % Elongation | 63 - 65 | 62 - 64 | 66 - 68 | 64 - 67 |
| 4. | Tenacity, g/d | 2.8-3.1 | 2.6-2.9 | 3.0-3.3 | 3.4-3.8 |
| 5. | Shrinkage at 60°C, in air, 15 minutes | 7 - 10 | 8 - 10 | 7-9 | 6-9 |

**TABLE -11**

| Drawn & Undrawn Fibre Properties of PTT and PTT-CoPET at Different Compositions | | | | | | | | | | | |
|---|---|---|---|---|---|---|---|---|---|---|---|
| Ex.No. | %Blend PTT: CoPET | Undrawn Yarn (Spun Yarn) Properties | | | | | | Drawn Yarn(Draw Twisted) Properties | | | |
| - | - | D | %E | B.L. | % B.W.S | | | D | %E | T g/d | % BWS |
| - | - | - | - | - | 0 hrs | 12 hrs | 24 hrs | - | - | - | - |
| - | 100% PTT | 3.81 | 161.2 | 10.30 | 28.00 | 14.60 | 11.50 | 2.22 | 28.30 | 4.36 | 14.60 |
| 1. | 95:5 | 4.33 | 165.6 | 11.20 | 41.00 | 28.30 | 26.50 | 2.61 | 34.00 | 4.36 | 15.70 |
| 2. | 80:20 | 3.88 | 169.6 | 10.30 | 57.80 | 47.20 | 53.00 | 2.55 | 51.90 | 4.20 | 21.40 |
| 3. | 40:60 | 3.93 | 169.5 | 10.80 | 73.20 | 72.50 | 72.10 | 2.22 | 31.50 | 5.22 | 21.10 |
| 4. | 20:80 | 4.41 | 292.7 | 8.10 | 71.70 | 71.00 | 72.80 | 1.77 | 42.90 | 4.32 | 17.80 |
| 5. | 20:80 | 4.46 | 358.0 | 5.28 | 72.80 | 71.50 | 68.10 | 2.17 | 32.10 | 5.22 | 18.00 |
| 6 & 7 | 80:20 Tetra Lobal | 3.34 | 216.0 | 6.59 | 61.90 | 61.83 | 61.36 | 1.99 | 65.00 | 3.30 | 21.32 |

| | | | | | | | | | | | |
|---|---|---|---|---|---|---|---|---|---|---|---|
| **Note:** Ex.No. are Example Nos. given in the text D is Denier of the fibre, Undrawn or Drawn %E is Elongation of the fibre, Undrawn or Drawn BL is Breaking Load in grams of Undrawn fibre %BWS is %Boiling Water Shrinkage of Undrawn or Drawn fibre T g/d is Tenacity of Drawn fiber | | | | | | | | | | | |

Thus this invention discloses a polyester resin composition comprising an alloy / blend of PTT and CoPET as a better alternate to 100 % PTT in making staple fiber or POY with circular or tetrachannel cross-sections. This alloy/blend composition of PTT and CoPET helps in avoiding the storage of the undrawn fiber/filament yarn under controlled temperature conditions. The undrawn fiber/filament yam produced with this composition of the resin performs better in the two stage drawing system for staple fiber or in the process of making partially oriented yarn (POY) or fully drawn yarn (FDY) giving better properties in the finished staple fiber and filament yarn.

While emphasis has been laid on the composition of the fiber it will be obvious to one skilled in the art that various modifications can be envisaged within the ambit and scope of the invention.

## Claims

1. A polymer resin for making melt spun staple fibers and partially oriented yarn with circular and tetra lobal cross sections, said resin comprising Polytrimethylene Terephthalate (PTT) homogenously blended with a CoPolyester of Polyethylene Terephthalate (CoPET) with a PTT:CoPET composition ranging between 95:5 and 5:95 by weight, said CoPET containing a dicarboxylic acid selected from oxalic acid, malonic acid, succinic acid, glutaric acid, adipic acid, pimelic acid, suberic acid, azelaic acid, sebacic acid and 1,10-decanedicarboxylic acid and aromatic carboxylic acids selected from isophthalic acid, sulfoisophthalic acid, phthalic acid, naphthalenedicarboxylic acid and diphenyl ether dicarboxylic acid.

2. A polymer resin as claimed in claim 1, in which the ratio of PTT to CoPET is in the range of 80:20 to 30:70 by weight.

3. A polymer resin as claimed in claim 1 or 2, in which the intrinsic viscosity of the PTT ranges from 0.85 to 1.40.

4. A polymer resin as claimed in claim 1, 2 or 3 in which the intrinsic viscosity of the CoPET ranges from 0.50 to 0.70.

5. Fiber having a circular cross section made from the polymer resin of any one of claims 1 to 4.

6. Fiber having a multi channel cross section made from the polymer resin of any one of claims 1 to 4.

7. Fiber having a tetra lobal cross section made from the polymer resin of any one of claims 1 to 4.
